# EUROPÄISCHE PATENTSCHRIFT

(11) **EP 3 580 617 B1**
(45) Veröffentlichungstag und Bekanntmachung des Hinweises auf die Patenterteilung: **13.09.2023**
(21) Anmeldenummer: 18704241.1
(22) Anmeldetag: 09.02.2018
(51) Int. Cl.: G03G 15/16, G03G 15/22, B29C 64/106, B29C 64/205, B29C 64/141, B33Y 10/00, B33Y 30/00

(54) **VERFAHREN UND VORRICHTUNG ZUM HERSTELLEN EINES DREIDIMENSIONALEN FORMGEGENSTANDS MITTELS SCHICHTWEISEM MATERIALAUFTRAG**
METHOD AND DEVICE FOR PRODUCING A THREE-DIMENSIONAL SHAPED OBJECT BY MEANS OF LAYER-BY-LAYER MATERIAL APPLICATION
PROCÉDÉ ET DISPOSITIF DE FABRICATION D'UN OBJET MOULÉ TRIDIMENSIONNEL PAR APPORT DE MATIÈRE PAR COUCHES

(30) Priorität: 11.02.2017 DE 102017001276
(43) Veröffentlichungstag der Anmeldung: 18.12.2019
(73) Patentinhaber: dp polar GmbH, 76344 Eggenstein-Leopoldshafen (DE); ALTANA AG, 46483 Wesel (DE)
(72) Erfinder: MATHEA, Hans, 76344 Eggenstein-Leopoldshafen (DE); BOHN, Martin, 72762 Reutlingen (DE)
(74) Vertreter: Huwer, Andreas
(86) Internationale Anmeldenummer: PCT/EP2018/053365
(87) Internationale Veröffentlichungsnummer: WO 2018/146287

(56) Entgegenhaltungen:
- US-A1- 2015 266 241
- US-B1- 6 206 672

## Beschreibung

Die Erfindung betrifft ein Verfahren zum Herstellen eines dreidimensionalen Formgegenstands und eine Vorrichtung zum Herstellen eines dreidimensionalen Formgegenstands.

Eine derartige Vorrichtung ist unter der Bezeichnung Stratasys^{®} Objet30 Pro im Handel verfügbar. Die Vorrichtung hat eine Halterung, an der ein Trägerteil mit einer etwa rechteckigen Basisfläche angeordnet ist, die sich in einer Horizontalebene erstreckt. Auf die Basisfläche ist der herzustellende dreidimensionale Formgegenstand durch Auftragen einer Vielzahl von übereinandergeschichteten Materialschichten schichtweise aufbringbar.

Über der Basisfläche sind mehrere Druckköpfe an der Halterung angeordnet, die jeweils mehrere, in einer Reihe nebeneinander angeordnete Düsen haben, aus denen Materialportionen eines fließfähigen Materials auf die Basisfläche bzw. eine darauf befindliche verfestigte Materialschicht des dreidimensionalen Formgegenstands abgebbar ist. Die Reihen mit den Düsen sind parallel zu den beiden kurzen Rändern der rechteckigen Basisfläche angeordnet und mittels einer Positioniereinrichtung parallel zu den beiden langen Rändern der rechteckigen Basisfläche verschiebbar. Mit Hilfe der Positioniereinrichtung kann das die Basisfläche aufweisende Trägerteil außerdem auf die Druckköpfe zu und von diesen weg bewegt werden.

Die Düsen eines ersten Druckkopfs sind mit einem ersten Reservoir verbunden, das mit einem dünnflüssigen ersten Polymer befüllt ist. Die Düsen eines zweiten Druckkopfs sind mit einem zweiten Reservoir verbunden, das mit einem dünnflüssigen zweiten Polymer befüllt ist, welches sich von dem ersten Polymer unterscheidet. Die Polymere können beispielsweise unterschiedliche Farben oder unterschiedliche mechanische oder chemische Eigenschaften aufweisen. In Sachen Festigkeit nach der Härtung bleiben sie aber immer noch im unteren Bereich, der durch die niedrigviskosen Materialien beschränkt wird. Mit Hilfe der Druckköpfe lassen sich Materialschichten auftragen, die aus den unterschiedlichen Polymeren und/oder einem Gemisch dieser Polymere bestehen. So ist es beispielsweise möglich, dass jeder Druckkopf jeweils 50% der aufzutragenden Materialmenge abgibt, so dass sich die Polymere des ersten und zweiten Reservoirs beim Auftragen im Verhältnis 50:50 miteinander vermischen.

Benachbart zu den Druckköpfen ist eine Fixiereinrichtung angeordnet, die zum Vernetzen bzw. Verfestigen der mit Hilfe der Druckköpfe aufgetragenen Materialschichten eine ultraviolette Strahlungsquelle aufweist. Die Fixiereinrichtung ist zusammen mit den Druckköpfen relativ zu der Basisfläche bewegbar.

Die Positioniereinrichtungen und der Druckkopf sind mit einer Steuereinrichtung verbunden, welche die Positioniereinrichtungen und die Materialabgabe des Druckkopfs derart steuert, dass der Formgegenstand durch schichtweisen Materialauftrag herstellbar ist.

Zur Herstellung eines Formgegenstands werden die Druckköpfe benachbart zu einem ersten Rand der Unterlage in einem vorbestimmten Abstand über dieser positioniert. Aus einem Datenspeicher, in dem Geometriedaten für den herzustellenden Formgegenstand abgelegt sind, werden Daten für die Geometrie einer ersten Materialschicht in einen schnellen Druckpuffer geladen. Danach werden die Druckköpfe mit Hilfe der ersten Positioniereinrichtung kontinuierlich auf den gegenüberliegenden zweiten Rand der Unterlage zu verfahren. Gleichzeitig wird durch entsprechendes Ansteuern der einzelnen Düsen der Druckköpfe an den Stellen, an denen auf der Unterlage eine erste Materialschicht des Formgegenstands ausgebildet werden soll, jeweils mindestens eine Materialportion auf die Unterlage abgegeben. Die Ansteuerung der einzelnen Düsen erfolgt in Abhängigkeit von der aktuellen Position des betreffenden Druckkopfs und in Abhängigkeit von den im Druckpuffer befindlichen Daten. Das so auf die Unterlage aufgetragene fließfähige Polymermaterial wird durch Bestrahlung mit ultravioletter Strahlung verfestigt, welche mit Hilfe der Fixiereinrichtung erzeugt wird.

Wenn der Druckkopf am zweiten Rand der Unterlage angekommen ist, wird die horizontale Vorschubbewegung des Druckkopfs gestoppt und aus dem Datenspeicher werden Geometriedaten für eine auf die zuvor erzeugte Materialschicht aufzutragende weitere Materialschicht in den Druckpuffer geladen. Außerdem wird das Trägerteil mit der Basisfläche um ein Maß, dass der Dicke der zuvor erzeugten Materialschicht entspricht, abgesenkt, um auf diese Materialschicht eine weitere Materialschicht aufzutragen. Nun werden die Druckköpfe mit Hilfe der Positioniereinrichtung kontinuierlich auf den ersten Rand der Unterlage zu bewegt. Gleichzeitig wird durch entsprechendes Ansteuern der Düsen an den Stellen, an denen die weitere Materialschicht ausgebildet werden soll, jeweils mindestens eine Materialportion auf die bereits fertig gestellte und verfestigte Materialschicht abgegeben. Das so auf die Unterlage aufgetragene fließfähige Polymermaterial wird wiederum durch Bestrahlung mit ultravioletter Strahlung verfestigt, welches mit Hilfe der Fixiereinrichtung erzeugt wird.

Die vorstehend genannten Verfahrensschritte werden in entsprechender Weise solange wiederholt, bis der Formgegenstand fertig gestellt ist.

Da bei der vorbekannten Vorrichtung die Düsen, mittels denen das fließfähige Material aufgetragen wird, kleine Düsenquerschnitte haben, um eine entsprechend hohe Auflösung zu ermöglichen, müssen die fließfähigen Materialien eine entsprechend niedrige Viskosität haben, um aus den Düsen ausgestoßen werden zu können. Üblicherweise beträgt diese Viskosität etwa 5 bis 25 MPa•s. Die in dem fließfähigen Materialien enthaltenen Polymerketten müssen daher entsprechend kurz sein. Dies hat aber den Nachteil, dass die schichtweise hergestellten Formgegenstände nur eine vergleichsweise geringe mechanische Festigkeit aufweisen. Auch lässt sich auf andere Eigenschaften der schichtweise hergestellten Formgegenstände durch die Auswahl der zum Drucken verwendeten Materialien nur begrenzt Einfluss nehmen. Ungünstig ist außerdem, dass das schichtweise Herstellen der Formgegenstände zeitaufwändig ist.

Aus der US 2015/0266241 A1 und der US 6 206 672 B1 ist jeweils ein Verfahren und eine Vorrichtung bekannt, bei denen auf ein über Umlenkelemente umlaufendes Transferband Materialschichten aufgebracht werden, die jeweils bereichsweise aus einem ersten und bereichsweise aus einem zweiten Material bestehen. Das erste Material wird mittels einer ersten Elektrofotografie-Vorrichtung und das zweite Material wird mittels einer zweiten Elektrofotografie-Vorrichtung auf das Transferband aufgetragen. Mit Hilfe des Transferbands werden sie auf diese Weise erzeugten, strukturieren Materialschichten an einer Basisfläche bzw. einer darauf befindlichen verfestigten Materialschicht positioniert und zu einem Formgegenstand übereinander geschichtet. Bei dem aus der US 2015/0266241 A1 bekannten Verfahren wird die Oberfläche der jeweils obersten Materialschicht des Formgegenstands mittels einer lösungsmittelbasierten Planarisierungseinrichtung eingeebnet und in einem konstanten Abstand zur Basisfläche angeordnet.

Es besteht deshalb die Aufgabe, ein Verfahren und eine Vorrichtung der eingangs genannten Art zu schaffen, die ein schnelles Herstellen eines eine hohe mechanische Festigkeit aufweisenden Formgegenstands mit hoher Auflösung ermöglichen. Außerdem sollen es das Verfahren und eine Vorrichtung ermöglichen, durch entsprechendes Auswählen der zum Herstellen der Materialschichten verwendeten fließfähigen Materialien die physikalischen und/oder chemischen Eigenschaften in einem weiten Bereich einzustellen. Insbesondere sollen mit dem Verfahren und der Vorrichtung auch Formgegenstände herstellbar sein, die hochviskose, oder nicht digital druck- bzw. auftragbare Polymere enthalten.

Erfindungsgemäß wird diese Aufgabe bezüglich des Verfahrens mit den Merkmalen des Anspruchs 1 gelöst.

Es handelt sich also um ein Hybridverfahren, bei dem zunächst durch Auftragen von Materialportionen, an den Stellen, an denen eine erste Materialschicht des Formgegenstands sein soll, die erste Materialschicht "digital" strukturiert und verfestigt wird und danach auf die erste Materialschicht mit einem "analogen" Kontaktdruckverfahren mindestens eine weitere Materialschicht aufgebracht wird. Das zweite Material für die weitere Materialschicht wird derart auf der Basisfläche bzw. der darauf befindlichen, verfestigten Materialschicht angeordnet, dass die der Basisfläche abgewandte, gesamte zu bedruckende Oberfläche der weiteren Materialschicht an jeder Position in einem konstanten Abstand zur Basisfläche angeordnet ist. Bei einer ebenen Basisfläche verläuft also die Oberfläche der weiteren Materialschicht in einer parallel zur Ebene der Basisfläche beabstandeten Ebene. Bei einer zylindrischen Basisfläche liegt die der Basisfläche abgewandte Oberfläche der weiteren Materialschicht in einer zur Basisfläche konzentrischen Zylinderfläche. Bei dem "analogen" Kontaktdruckverfahren wird zunächst auf dem Transferkörper eine Schicht des fließfähigen zweiten Materials erzeugt und dann wird an diejenigen Bereichen dieser Schicht, die der ersten Materialschicht entsprechen, Material auf die erste Materialschicht übertragen. Somit entspricht die Struktur der auf diese Weise erzeugten weiteren Materialschicht in der orthogonalen Projektion auf die Basisfläche zumindest bereichsweise der Struktur, welche die oberste verfestigte Materialschicht des dreidimensionalen Formgegenstands in der orthogonalen Projektion auf die Basisfläche aufweist. Da mit dem Kontaktdruckverfahren auch hochviskose Materialien auf eine strukturierte Materialschicht aufgebracht werden können, lassen sich mit dem Verfahren auch Formgegenstände herstellen, die nicht digital druckbare Polymere enthalten. Dies ermöglich eine hohe mechanische Festigkeit des Formgegenstands. Mit dem erfindungsgemäßen Verfahren können Formgegenstände beliebiger Höhe (ohne Höheneinschränkung) entsprechend vorgegebener Geometriedaten hergestellt werden. Die durchschnittliche Bauteilhöhe des Formgegenstands beträgt gewöhnlich 0,01 m bis 1 m. Sie ist in der Praxis nur durch maschinenbauliche Limits, wie z.B. den maximal zulässigen Hub der Trägerteils (Drucktisches) oder durch applikationsbedingte Faktoren beschränkt.

Bei Bedarf können zum Erzeugen der aus den Materialportionen hergestellten Materialschicht Materialportionen aus unterschiedlichen fließfähigen ersten Materialien auf die Basisfläche und/oder eine darauf befindliche verfestigte Materialschicht des dreidimensionalen Formgegenstands aufgetragen werden. Dabei werden die aus unterschiedlichen fließfähigen ersten Materialien bestehenden Materialportionen in Erstreckungsrichtung Basisfläche entsprechend ihnen jeweils zugeordneten Geometriedaten vorzugsweise derart zueinander versetzt aufgetragen, dass sich die unterschiedlichen ersten Materialen beim Auftragen nicht oder nur geringfügig miteinander vermischen. In der Aufsicht auf die Basisfläche hat die so hergestellte Materialschicht dann Bereiche, die aus unterschiedlichen ersten Materialen bestehen. Diese Bereiche können direkt aneinander angrenzen und/oder durch Zwischenräume voneinander beabstandet sein. Insbesondere kann mindestens ein erstes Material als Baumaterial dienen und wenigstens ein weiteres erstes Material als Stützmaterial. Dabei ist das Stützmaterial in einer Flüssigkeit lösbar, in der das Baumaterial nicht lösbar ist. Somit kann das Stützmaterial nach dem Auftragen sämtlicher Materialschichten, durch Inkontaktbringen des Formgegenstands mit dem Lösungsmittel aus dem Schichtstapel herausgelöst werden. Auf diese Weise lassen sich mit Hilfe des Stützmaterials beispielsweise Formgegenstände mit Überhängen oder Hohlräume herstellen.

Die Materialportionen werden auf die Basisfläche und/oder die darauf befindliche verfestigte Materialschicht des dreidimensionalen Formgegenstands aufgetragen. Dies geschieht unter Verwendung einer Düse.

Bei einer vorteilhaften Weiterbildung des Verfahrens ist vorgesehen,
- dass nach dem Verfestigen der weiteren Materialschicht auf diese Materialschicht Materialportionen des fließfähigen ersten Materials entsprechend den 1 Geometriedaten aufgebracht werden, um eine Materialschicht des dreidimensionalen Formgegenstands zu erzeugen,
   oder
- dass nach dem Verfestigen der weiteren Materialschicht ein Oberflächenbereich des Transferkörpers mit einer Schicht des mindestens einen fließfähigen zweiten Materials beschichtet und diese Schicht derart mit der der Basisfläche abgewandten Oberfläche der obersten verfestigten Materialschicht in Kontakt gebracht wird, dass das fließfähige zweite Material von dem Transferkörper auf die Oberfläche der obersten verfestigten Materialschicht des dreidimensionalen Formgegenstands übertragen wird und auf dieser eine weitere Materialschicht bildet, deren Struktur derjenigen der obersten verfestigten Materialschicht entspricht,
und dass die so erhaltene oberste Materialschicht verfestigt wird. Nach dem Verfestigen der mit Hilfe des Kontaktdruckverfahrens erzeugten Materialschicht kann also auf diese auf die gleiche Weise mindestens eine weitere Materialschicht aufgebracht werden, um die zuerst genannte Materialschicht zu verstärken. Alternativ kann nach dem Verfestigen der mit Hilfe des Kontaktdruckverfahrens erzeugten Materialschicht auch mindestens eine weitere Materialschicht durch Auftragen von Materialportionen auf die mit Hilfe des Kontaktdruckverfahrens erzeugte Materialschicht aufgebracht werden.

Bei einer Weiterbildung des Verfahrens wird auf eine aus dem zweiten Material bestehende verfestigte Materialschicht durch Aufbringen von Materialportionen eine Materialschicht aus dem mindestens einen ersten Material derart strukturiert aufgebracht, dass zwischen zwei in der Erstreckungsebene der zuletzt genannten Materialschicht zueinander benachbarten Bereichen dieser Materialschicht mindestens ein sich bis zu der darunterliegenden verfestigten Materialschicht erstreckendes Durchtrittsloch gebildet ist, dass die derart strukturierte Materialschicht danach verfestigt wird, dass danach auf diese Materialschicht mittels des Transferkörpers das zweite Material aufgebracht wird, und dass mindestens eine Querschnittsabmessung des Durchtrittslochs derart
a) an den Druck, mit dem das zweite Material auf die das Durchtrittsloch aufweisende Materialschicht aufgebracht wird, und/oder
b) an die Materialstärke, mit dem das zweite Material auf die das Durchtrittsloch aufweisende Materialschicht aufgebracht wird, und/oder
c) an die Viskosität des zweiten Materials
angepasst wird, dass das Durchtrittsloch mit dem mittels des Transferkörpers aufgetragenen zweiten Material befüllt wird und das zweite Material mit der zuerst genannten verfestigten Materialschicht in Kontakt gerät. Der Abstand der in der Erstreckungsebene der Materialschicht beidseits des Durchtrittslochs befindlichen Bereichen der Materialschicht wird vorzugsweise kleiner gewählt als die Materialstärke dieser Materialschicht, insbesondere kleiner als die Hälfte und bevorzugt kleiner als ein Drittel der Materialstärke. Das Durchtrittsloch kann seitlich randoffen und insbesondere schlitzförmig ausgestaltet sein.

Wenn das zweite Material eine höhere mechanische Festigkeit aufweist als das erste Material ist der nach dem Verfahren hergestellte Formgegenstand sowohl parallel zu den Materialschichten (z.B. horizontal) als auch quer dazu (z.B. vertikal) verstärkt. Dabei ist es sogar möglich, dass das zweite Material eine Wabenstruktur bildet, die das erste Material verstärkt.

Bezüglich der Vorrichtung wird die vorstehend genannte Aufgabe mit den Merkmalen des Anspruchs 3 gelöst.

Die Erfindung sieht also eine Hybrid-Druckvorrichtung vor, die zusätzlich zu der Abgabeeinrichtung zum Auftragen der Materialportionen aufweisenden "digitalen" Druckvorrichtung eine "analoge" Kontaktdruckvorrichtung aufweist, die einen Transferkörper hat, auf den eine Schicht des im zweiten Reservoir befindlichen fließfähigen zweiten Materials aufbringbar ist, um dann an denjenigen Bereiche dieser Schicht, die der ersten Schicht entsprechen, das zweite Material auf die zuvor hergestellte, aus dem ersten Material bestehende verfestigte erste Materialschicht übertragen. Dabei entspricht die Struktur der auf diese Weise auf die erste Materialschicht aufgetragenen weiteren Materialschicht der Struktur der ersten Materialschicht. Da mit der Kontaktdruckvorrichtung auch hochviskose Materialien auf eine strukturierte Materialschicht aufgebracht werden können, lassen sich mit der Vorrichtung auch Formgegenstände herstellen, die langkettige Polymere enthalten. Dies ermöglich eine hohe mechanische Festigkeit des Formgegenstands. Außerdem ermöglicht die Kontaktdruckvorrichtung eine schnelle Herstellung der weiteren Materialschicht.

Vorteilhaft ist, wenn die Vorrichtung eine erste Nivelliereinrichtung hat, die ein erstes Nivellierwerkzeug aufweist, das derart mit der Oberfläche einer auf die Basisfläche und/oder eine verfestigte Materialschicht aufgebrachten Materialschicht aus dem mindestens einen fließfähigen ersten Material in Kontakt bringbar ist, dass die Oberfläche des mindestens fließfähigen ersten Materials in einem konstanten Abstand zur Basisfläche angeordnet wird. Dabei kann das Nivellierwerkzeug im einfachsten Fall eine Material aufnehmende Rakel sein.

Bei Bedarf kann die Materialauftragungseinrichtung eine zweite Nivelliereinrichtung haben, die ein zweites Nivellierwerkzeug aufweist, das derart mit der Oberfläche einer auf die Basisfläche und/oder eine verfestigte Materialschicht aufgebrachten Materialschicht aus dem fließfähigen zweiten Material in Kontakt bringbar ist, dass die Oberfläche des fließfähigen zweiten Materials in einem konstanten Abstand zur Basisfläche angeordnet wird. Auch in diesem Fall kann das Nivellierwerkzeug im einfachsten Fall eine Material aufnehmende Rakel sein.

Bei einer bevorzugten Ausführungsform der Erfindung ist das erste und/oder das zweite Nivellierwerkzeug als Glättungswalze ausgestaltet, die um eine parallel zur Basisfläche angeordnete Drehachse relativ zum Trägerteil drehbar gelagert ist. Die Glättungswalze ist bevorzugt mittels eines entsprechenden Antriebs drehantreibbar, wobei die Drehrichtung bevorzugt entgegen der Vorschubbewegung des Trägerteils orientiert ist. Eventuelle, über das zu nivellierende Niveau überstehende Teilbereiche des fließfähigen Materials bleiben an der Mantelfläche der Glättungswalze haften und werden von dieser in Drehrichtung mitgenommen. Von der Mantelfläche kann das überschüssige Material mit Hilfe eines Abstreifers abgelöst und in einen Abfallbehälter abgeführt werden. Die Glättungswalze ermöglicht eine besonders genaue Nivellierung der Oberfläche des fließfähigen ersten und zweiten Materials und ermöglicht eine immer gleichbleibende Gesamtschichtstärke des aus den ersten und zweiten Materialien bestehenden Materialschichten gebildeten Schichtstapels.

Gemäß der Erfindung hat die Abgabeeinrichtung zur Abgabe der Materialportionen mindestens eine Düse aufweisende digitale Materialabgabeeinheit. Dabei wird unter einer digitalen Materialabgabeeinheit eine Einrichtung verstanden, mittels der in Abhängigkeit von einem logischen Signal eine vorbestimmte Menge des zu druckenden Materials entweder abgegeben wird oder nicht.

Bei einer vorteilhaften Weiterbildung der Erfindung ist vorgesehen, dass die Abgabeeinrichtung mindestens eine Reihe mit mehreren nebeneinander angeordneten Materialabgabeeinheiten zur Abgabe der Materialportionen aufweist, und dass sich die Reihe parallel zur Basisfläche und quer zu der Richtung erstreckt, in die die Abgabeeinrichtung und das Trägerteil parallel zur Basisfläche relativ zueinander bewegbar sind. Dabei ist es sogar möglich, dass sich die Materialabgabeeinheiten-Reihe über die gesamte Breite des zu bedruckenden Bereichs erstreckt. Dies ermöglicht einen schnellen, flächigen Materialauftrag. Bei Bedarf können mindestens zwei Materialabgabeeinheiten vorgesehen sein, die mit getrennten Reservoirs verbunden sind, in denen unterschiedliche ersten Materialien bevorraten werden können, beispielsweise ein fließfähiges Baumaterial und ein fließfähiges Stützmaterial.

Bei einer Weiterbildung der Erfindung ist der Transferkörper als Auftragswalze ausgestaltet, die mit Hilfe der zweiten Positioniereinrichtung um eine parallel zur Basisfläche angeordnete Rotationsachse drehantreibbar ist. Dabei kann die Auftragswalze insbesondere eine Beschichtungswalze sein.

Bei einer zweckmäßigen Ausführungsform der Erfindung ist vorgesehen, dass der Auftragswalze eine Zuführwalze zugeordnet ist, die um eine parallel zur Rotationsachse der Auftragswalze angeordnete Walzenachse drehantreibbar ist und zum Beschichten ihrer Mantelfläche mit dem fließfähigen zweiten Material mit einem Teilbereich ihrer Mantelfläche in das zweite Reservoir eintaucht, und dass die Mantelfläche der Zuführwalze derart dicht zur Mantelfläche der Auftragswalze benachbart ist, dass das auf die Mantelfläche der Zuführwalze aufgetragene zweite Material bei einer Drehbewegung der Zuführwalze um die Walzenachse auf die Mantelfläche der Auftragswalze übertragbar ist. Die Zuführwalze ermöglich eine einfache und gleichmäßige Beschichtung der Mantelfläche der Auftragswalze mit dem fließfähigen zweiten Material.

Bei einer besonders bevorzugten Ausgestaltung der Erfindung ist die Auftragswalze als Rotations-Siebdruckwalze ausgestaltet. Aufgrund der sehr hohen Viskosität der zu verarbeitenden Druckmaterialien und der Schichtaufbau-Dicke kann hierdurch eine besonders starke und schnelle Beschichtung erreicht werden.

Bei einer Ausführungsform der Erfindung sind die aus der Abgabeeinrichtung und der Auftragswalze gebildete Anordnung und das Trägerteil mittels der ersten Positioniereinrichtung entlang einer parallel zur Basisfläche angeordneten geraden Linie relativ zueinander hin- und her bewegbar. Bei dieser Ausführungsform werden die Geometriedaten für den Formgegenstand bevorzugt im kartesischen Koordinatensystem bereitgestellt, entweder in Form von Bildpunkten oder in vektorisierter Form. Auch die Koordinaten der Stellen, an denen die Materialportionen auf die Basisfläche bzw. eine darauf befindliche verfestigte Materialschicht des dreidimensionalen Formgegenstands abgegeben werden, liegen bevorzugt im kartesischen Koordinatensystem vor.

Bei einer anderen vorteilhaften Ausführungsform der Erfindung sind die aus der Abgabeeinrichtung und der Auftragswalze gebildete Anordnung und das Trägerteil mittels der ersten Positioniereinrichtung um eine normal zu der Basisfläche angeordnete Drehachse relativ zueinander verdrehbar, wobei die Auftragswalze konisch ausgebildet ist, und wobei die Rotationsachse der Auftragswalze durch die Drehachse verläuft. Auch bei dieser Ausführungsform werden die Geometriedaten für den Formgegenstand bevorzugt im kartesischen Koordinatensystem bereitgestellt, entweder in Form von Bildpunkten oder in vektorisierter Form. Die Koordinaten der Stellen, an denen die Materialportionen auf die Basisfläche bzw. eine darauf befindliche verfestigte Materialschicht des dreidimensionalen Formgegenstands abgegeben werden, liegen jedoch bevorzugt im Polarkoordinatensystem vor. Die Rotationsachse der Auftragswalze kann eine physikalische Rotationsachse oder eine gedachte Linie sein.

Vorteilhaft ist, wenn die aus der Abgabeeinrichtung und der Auftragswalze gebildete Anordnung und das Trägerteil mittels der ersten Positioniereinrichtung normal zu der Basisfläche voneinander weg und aufeinander zu bewegbar sind. Die Basisfläche kann dann nach dem Auftragen einer Materialschicht jeweils um die Dicke dieser Materialschicht abgesenkt werden. Dadurch bleibt der Abstand zwischen der Abgabeeinrichtung und der Stelle, an der die Materialportionen aufgetragen werden, bei allen Materialschichten konstant. Auch der Abstand zwischen der Auftragswalze und der Stelle, an der das zweite Material mit der Auftragswalze aufgetragen wird, bleibt konstant. Je nach Betriebsart kann die Absenkung auch nicht gleichbleibend ausgeführt werden, z.B. wenn unterschiedliche Schichtdicken aufgetragen werden.

Bei einer bevorzugten Ausführungsform der Erfindung weist das zweite Material im verfestigten Zustand eine größere mechanische Festigkeit auf als das erste Material und/oder das zweite Material hat andere mechanische, elektrische, oder chemische Eigenschaften als das erste Material. In diesem Fall dienen die das zweite Material aufweisenden Materialschichten als Verstärkungsschichten, welche die mechanischen Festigkeit bzw. der Stabilität des Formgegenstands erhöhen oder dessen Eigenschaft funktional erweitern. Die Verstärkung bzw. Erweiterung lässt sich durch Verändern der Schichtdicke des zweiten Materials bzw. des Verstärkungsmaterials einstellen. Dabei nimmt die mechanische Belastbarkeit des Formgegenstands mit der Schichtdicke der aus dem zweiten Material bestehenden Materialschicht(en) zu. Die Materialschichten aus dem niedrigviskoseren ersten Material, das beispielsweise ein Standard-Polymere sein kann, dienen als Aufbaumaterial.

Das zweite Material kann ein ungefülltes Material sein, vorzugsweise ein homogenes Material. Das zweite Material kann auch ein gefülltes Material sein, das mindestens einen organischen Füllstoff und/oder mindestens einen anorganischen Füllstoff enthält. Der Füllstoff kann zum Beispiel Partikel, Fasern oder Plättchen umfassen, die in ein Trägermedium eingebettet sind. Das Trägermedium kann zum Beispiel ein Lösemittel, einen Binder und/oder ein reaktives Harz enthalten.

Bei einer vorteilhaften Ausführungsform der Erfindung ist das zweite Material elektrisch und/oder optisch und/oder magnetisch leitfähig und das erste Material ist elektrisch und/oder optisch und/oder magnetisch isolierend. Die erfindungsgemäße Vorrichtung und das erfindungsgemäße Verfahren sind also auch zum Fertigen von gedruckten elektrischen und/oder optischen Schaltungen geeignet. Das Verfahren und die Vorrichtung erlauben eine sehr flexible und schnelle Realisierung von elektrischen und/oder optischen Verbindungen in und auf schichtweise geruckten dreidimensionalen Formgegenständen. Hierbei bestimmt die mittels der Abgabeeinrichtung zur Abgabe von Materialportionen gedruckte Materialschicht den Verbindungsverlauf der darauf aufgebrachten elektrisch und/oder optisch leitenden Bahnen. Eine Besonderheit ist die Fähigkeit, Leiterbahnen im Inneren der Formgegenstände zu drucken, ohne, dass hierfür eine extra Leiterplatte benötigt wird.

Eine weitere Besonderheit macht diese Lösung kostengünstig: die auf dem Markt üblichen Nano-Tinten mit Silberpartikeln sind sehr teuer, weil sie leitfähig, aber niedrigviskos sein müssen. Das für die Erfindung verwendbare leitfähige Material kann hinsichtlich seiner Viskosität der Viskosität der im Schablonen-Druck verwendeten Druckmaterialien entsprechen, die auf dem Markt schon sehr verbreitet und kostengünstiger sind als niedrigviskose Tinten mit Nano-Silberpartikeln.

Erwähnt werden soll noch, dass die fließfähigen Materialien unterschiedliche Barriere-Eigenschaften aufweisen können. So kann beispielsweise eines der Materialien für Gase und/oder Flüssigkeiten durchlässig sein und das andere nicht.

Zum Herstellen von Überhängen kann mit Hilfe der Abgabeeinrichtung bereichsweise mindestens ein Stützmaterial für das erste fließfähige Material auf die Basisfläche und/oder eine darauf befindliche verfestigte Materialschicht des dreidimensionalen Formgegenstands aufgebracht werden. Nachdem das Stützmaterial verfestigt und auf das Stützmaterial mit Hilfe des Transferkörpers eine das zweiten Material aufweisende Materialschicht aufgebracht und diese ebenfalls verfestigt wurde, kann das Stützmaterial durch Inkontaktbringen mit einem Lösungsmittel, wie z.B. Wasser, entfernt werden.

Nachstehend sind Ausführungsbeispiele der Erfindung anhand der Zeichnung näher erläutert. Es zeigt:
- Fig. 1: einen Längsschnitt durch eine Vorrichtung zum Herstellen eines dreidimensionalen Formgegenstands während eines ersten Arbeitsdurchgangs, bei dem zwei Materialschichten des Formgegenstands aufgetragen werden, wobei die Vorrichtung eine Beschichtungswalze aufweist,
- Fig. 2: einen Längsschnitt durch die in Fig. 1 gezeigte Vorrichtung während eines ersten Arbeitsdurchgangs, bei dem zwei weitere Materialschichten aufgetragen werden,
- Fig. 3: einen Längsschnitt durch die in Fig. 1 gezeigte Vorrichtung während eines Arbeitsdurchgangs, bei dem auf eine Materialschicht des Formgegenstands eine weitere Materialschicht aufgetragen wird, die aus dem gleichen Material wie die zuerst genannte Materialschicht,
- Fig. 4: einen Längsschnitt durch eine Vorrichtung zum Herstellen eines dreidimensionalen Formgegenstands, die eine Rotationssiebdruckwalze aufweist,
- Fig. 5: einen Längsschnitt durch eine gedruckte Leiterplatte,
- Fig. 6: eine Aufsicht auf die gedruckte Leiterplatte,
- Fig. 7: einen Längsschnitt durch einen Formgegenstand, und
- Fig. 8: eine Darstellung ähnlich Fig. 1, wobei jedoch die Vorrichtung zum Aufbringen von Materialportionen zweier unterschiedlicher erster Materialien ausgestaltet ist.

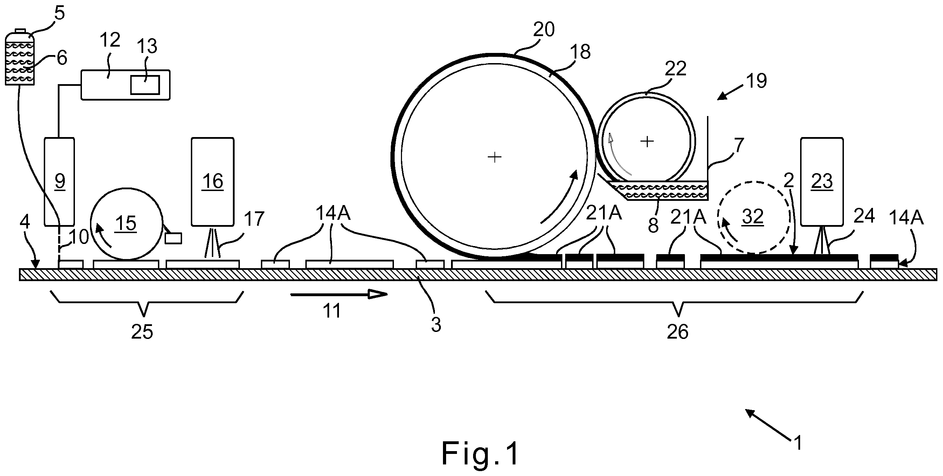

Eine in Fig. 1 im Ganzen mit 1 bezeichnete Vorrichtung zum Herstellen eines dreidimensionalen Formgegenstands 2 mittels schichtweisem Materialauftrag weist ein plattenförmiges Trägerteil 3 mit einer in einer Horizontalebene angeordneten Basisfläche 4 zur Aufnahme des Formgegenstands 2 auf. Die Basisfläche 4 ist im Wesentlichen rechteckig ausgestaltet. Es sind aber auch andere Ausgestaltungen denkbar, bei denen die Basisfläche 4 insbesondere die Form einer Kreisscheibe oder einer Kreisringscheibe aufweisen kann.

Die Vorrichtung hat ferner ein erstes Reservoir 5 zur Aufnahme eines fließfähigen ersten Materials 6 und ein zweites Reservoir 7 zur Aufnahme eines sich vom fließfähigen ersten Material 6 unterscheidenden fließfähigen zweiten Material 8. Wie in Fig. 1 erkennbar ist, ist das erste Reservoir 5 als im Wesentlichen geschlossener Behälter und das zweite Reservoir 7 als Wanne ausgebildet.

Das erste Reservoir 5 ist über eine Leitung mit einer ortsfest oder beweglich angeordneten Abgabeeinrichtung 9 für das erste Material 6 verbunden. Die Abgabeeinrichtung 9 ist als Inkjet-Druckkopf mit einer Vielzahl von in einer Reihe angeordneten, in der Zeichnung nicht näher dargestellten Düsen ausgestaltet, die zur Abgabe von Materialportionen 10 des ersten Materials 6 auf die Basisfläche 4 bzw. eine darauf befindliche verfestigte Materialschicht des dreidimensionalen Formgegenstands 2 gerichtet sind. Die Düsenreihe ist parallel zu den beiden kurzen Rändern der rechteckigen Basisfläche 4 angeordnet und erstreckt sich über deren gesamte Breite.

Das Trägerteil 3 und die Abgabeeinrichtung 9 sind mit Hilfe einer in der Zeichnung nicht näher dargestellten ersten Positioniereinrichtung in und entgegen der Richtung des Pfeils 11 relativ zueinander verschiebbar.

Die Abgabeeinrichtung 9 und die erste Positioniereinrichtung sind mit einer Steuereinrichtung 12 verbunden, die einen Datenspeicher 13 zum Ablegen von Geometriedaten des herzustellenden Formgegenstands 2 aufweist. Mittels der Steuereinrichtung 12 sind die Abgabe der Materialportionen 10 und die Positioniereinrichtung in Abhängigkeit von den Geometriedaten derart in an sich bekannter Weise steuerbar, dass aus dem fließfähigen ersten Material 6 bestehende Materialschichten 14A des dreidimensionalen Formgegenstands 2 in Form als Schichtstapel auf die Basisfläche 4 und/oder die darauf befindliche verfestigte Materialschicht des dreidimensionalen Formgegenstands 2 aufbringbar sind.

Zum Glätten und Nivellieren der jeweils obersten, aus dem fließfähigen ersten Material 6 bestehenden Materialschicht 14A ist in Richtung des Pfeils 11 vor der Abgabeeinrichtung 9 eine erste Nivelliereinrichtung vorgesehen, die eine erste Glättungswalze 15 aufweist, welche um ihre (gedachte) Drehachse relativ zum Trägerteil 3 drehbar gelagert ist. Die Drehrichtung der Glättungswalze 15 ist entgegen der durch den Pfeil 11 angedeuteten Vorschubbewegung des Trägerteils 3 orientiert. Über das zu nivellierende Niveau überstehende Teilbereiche des fließfähigen ersten Materials bleiben an der Mantelfläche der Glättungswalze 15 haften und werden von dieser in Drehrichtung mitgenommen. Von der Mantelfläche wird das Material mit Hilfe eines in der Zeichnung nur schematisch angedeuteten Abstreifers abgelöst und in einen Abfallbehälter geleitet.

Die Drehachse der ersten Glättungswalze 15 ist parallel zur Basisfläche 4 und normal zur Richtung des Pfeils 11 angeordnet. Ferner ist die gedachte Drehachse der Glättungswalze 15 ortsfest in Bezug zu der Abgabeeinrichtung 9, d.h. die Abgabeeinrichtung 9 und die erste Glättungswalze 15 einerseits sowie das Trägerteil 3 andererseits sind mittels der ersten Positioniereinrichtung in und entgegen der Richtung des Pfeils 11 relativ zueinander verschiebbar.

Die Glättungswalze 15 und das Trägerteil 3 sind in und entgegen der Richtung des Pfeils 11 relativ zueinander bewegbar. Bei den in der Zeichnung gezeigten Ausführungsbeispielen ist die gedachte Drehachse der Glättungswalze 15 ortsfest angeordnet und das Trägerteil 3 ist relativ dazu bewegbar. Es ist aber auch denkbar, dass das Trägerteil 3 ortsfest angeordnet ist und die Drehachse der Glättungswalze 15 sowie die Abgabeeinrichtung 9 bewegbar sind.

Zwischen der ersten Glättungswalze 15 und der Basisfläche 4 bzw. der Oberflächenebene obersten darauf befindlichen, verfestigten Materialschicht ist ein Spalt gebildet, dessen vertikale Abmessung der Dicke der aufzutragenden Materialschicht entspricht. Der Spalt erstreckt sich über die gesamte zu beschichtende Breite der Basisfläche 4. Der Abstand zwischen dem oberen Rand des Spalts bzw. der tiefsten Stelle der Mantelfläche der Glättungswalze 15 einerseits und der Basisfläche 4 andererseits wird beim Auftragen der einzelnen Materialschichten jeweils konstant gehalten.

Zum Verfestigen der aus dem fließfähigen ersten Material 6 bestehenden Materialschichten 14A ist in Richtung des Pfeils 11 vor der ersten Glättungswalze 15 eine erste Fixiereinrichtung 16 angeordnet. Diese weist eine in der Zeichnung nicht näher dargestellte UV-Strahlungsquelle auf, mittels der UV-Strahlung 17 auf die oberste Materialschicht 14A abgebbar ist. Die Wellenlänge und die Intensität der UV-Strahlung 17 sind derart gewählt, dass in der obersten Materialschicht 14A befindliche Polymere und/oder Copolymere vernetzen.

In Richtung des Pfeils 11 vor der ersten Fixiereinrichtung 16 weist die Vorrichtung 1 einen als Flexodruckwalze ausgebildeten Transferkörper 18 und eine mit dem zweiten Reservoir in Kontakt stehende Beschichtungseinrichtung 19 auf, mittels der zumindest ein Oberflächenbereich des Transferkörpers 18 mit einer Schicht 20 des zweiten Materials 8 beschichtbar ist.

Der Oberflächenbereich des Transferkörpers 18 ist mit Hilfe einer in der Zeichnung nicht näher dargestellten zweiten Positioniereinrichtung derart mit der der Basisfläche abgewandten Oberfläche der obersten verfestigten Materialschicht in Kontakt bringbar, dass das fließfähige zweite Material 8 als weitere Materialschicht 21A, deren Struktur derjenigen der obersten verfestigten Materialschicht 14A entspricht, von dem Transferkörper 18 auf die Oberfläche der obersten verfestigten ersten Materialschicht 14A übertragen wird. Mit Hilfe der zweiten Positioniereinrichtung ist der walzenförmige Transferkörper 18 um eine gedachte Rotationsachse, die parallel zur Basisfläche 4 und normal zur Richtung des Pfeils 11 angeordnet ist, derart drehbar, dass die auf der Mantelfläche des Transferkörpers 18 befindliche Schicht 20 des zweiten Materials 8 auf der obersten verfestigten Materialschicht abwälzt, wenn das Trägerteil 3 und die Abgabeeinrichtung 9 in Richtung des Pfeils 11 relativ zueinander bewegt werden.

Die erste und die zweite Positioniereinrichtung sind bevorzugt mit Hilfe von separaten Antriebsmotoren unabhängig voneinander antreibbar. Es ist aber auch denkbar, dass die erste und die zweite Positioniereinrichtung einen gemeinsamen Antriebsmotor aufweisen.

Bei dem in Fig. 1 bis 3 gezeigten Ausführungsbeispiel hat die Beschichtungseinrichtung eine Zuführwalze 22, die um eine parallel zur Rotationsachse des Transferkörpers 18 angeordnete Walzenachse drehantreibbar ist. Zum Beschichten ihrer Mantelfläche mit dem fließfähigen zweiten Material 8 taucht die Zuführwalze 22 mit einem unteren Teilbereich ihrer Mantelfläche in das zweite Reservoir 7 bzw. das darin befindliche fließfähige zweite Material 8 ein.

Die Mantelfläche der Zuführwalze 22 ist derart dicht zur Mantelfläche der Transferkörpers 18 benachbart ist, dass das auf die Mantelfläche der Zuführwalze 22 aufgetragene zweite Material 8 bei einer Drehbewegung der Zuführwalze 22 um die ihre Walzenachse auf die Mantelfläche des Transferkörpers 18 übertragbar ist. Von dieser wird das zweite Material 8 auf die oberste verfestigte Materialschicht 14A, 14B des herzustellenden Formgegenstands 2 übertragen.

Zum Glätten und Nivellieren der jeweils obersten, aus dem fließfähigen zweiten Material 8 bestehenden Materialschicht 21A, 21B kann bei Bedarf in Richtung des Pfeils 11 vor dem Transferkörper 18 eine zweite Nivelliereinrichtung vorgesehen sein, die eine zweite Glättungswalze 32 aufweist, welche um ihre (gedachte) Drehachse relativ zum Trägerteil 3 drehbar gelagert ist. Die Drehachse der zweiten Glättungswalze 32 ist parallel zur Basisfläche 4 und normal zur Richtung des Pfeils 11 angeordnet. Ferner ist die gedachte Drehachse der zweiten Glättungswalze 32 ortsfest in Bezug zur Lagerung des Transferkörpers 18, d.h. der Transferkörper 18 und die zweite Glättungswalze 32 einerseits sowie das Trägerteil 3 andererseits sind mittels der ersten Positioniereinrichtung in und entgegen der Richtung des Pfeils 11 relativ zueinander verschiebbar.

Zum Verfestigen der aus dem fließfähigen zweite Material 8 bestehenden obersten Materialschicht 21A ist in Richtung des Pfeils 11 vor dem Transferkörper 18 eine zweite Fixiereinrichtung 23 angeordnet. Diese weist eine in der Zeichnung nicht näher dargestellte UV-Strahlungsquelle auf, mittels der UV-Strahlung 24 auf die oberste Materialschicht 21A abgebbar ist. Die Wellenlänge und die Intensität der UV-Strahlung 24 sind derart gewählt, dass in der obersten Materialschicht 21A befindliche Polymere und/oder Copolymere vernetzen. Die Fixiereinrichtungen 16, 23 sind ortsfest in Bezug zu der Abgabeeinrichtung 9 angeordnet.

Zusammenfassend ergibt sich also, dass mit Hilfe der Vorrichtung 1 zunächst mittels eines digitalen Druckprozesses 25 eine aus dem ersten Material 6 bestehende strukturierte Materialschicht 14A erzeugt und verfestigt wird und dass danach auf diese Materialschicht 14A mittels eines analogen Druckprozesses 26 eine aus dem zweiten Material 8 bestehende weitere Materialschicht 21A mit entsprechende Struktur aufgebracht und verfestigt wird.

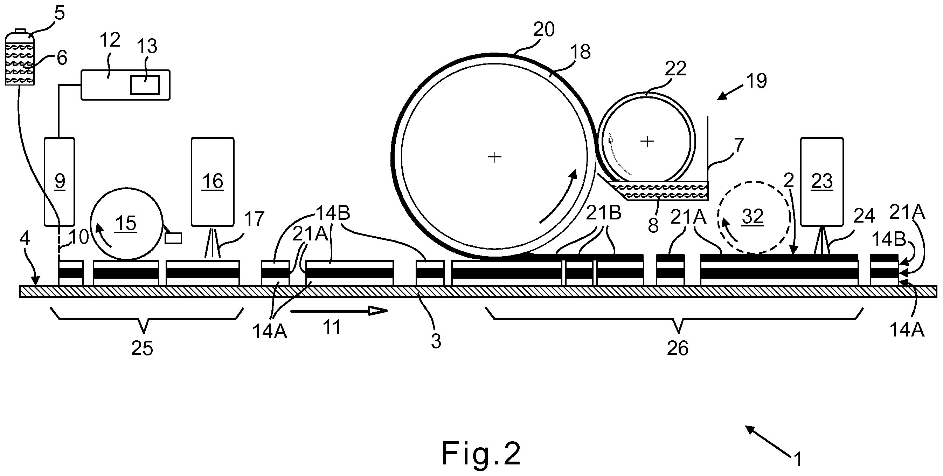

Nachdem die aus dem ersten Material 6 bestehende erste Materialschicht 14A und die aus dem zweiten Material 8 bestehende erste weitere Materialschicht 21A wie vorstehend beschrieben auf der Basisfläche 4 fertiggestellt wurde, wird das Trägerteil 3 mittels der ersten Positioniereinrichtung 4 um die Summe der Wandstärken dieser Materialschichten 14A, 21A relativ zur Abgabeeinrichtung 9, zur Glättungswalze 15, zu den Fixiereinrichtungen 16, 23 und zum Transferkörper 18 abgesenkt. Außerdem wird das Trägerteil 3 entgegen der Pfeilrichtung des Pfeils 11 in seine Ausgangslage zurückbewegt, um danach in entsprechende Weise eine aus dem ersten Material 6 bestehende zweite Materialschicht 14B sowie eine aus dem zweiten Material 8 bestehende zweite weitere Materialschicht 21B auf die verfestigte erste weitere Materialschicht 21A aufzutragen (Fig. 2). Diese Schritte werden solange wiederholt, bis der Formgegenstand 2 fertiggestellt ist. Dabei können die Verfahrensschritte mindestens zwanzigmal, gegebenenfalls mindestens fünfzigmal und bevorzugt mindestens mehrere Tausendmal durchlaufen werden.

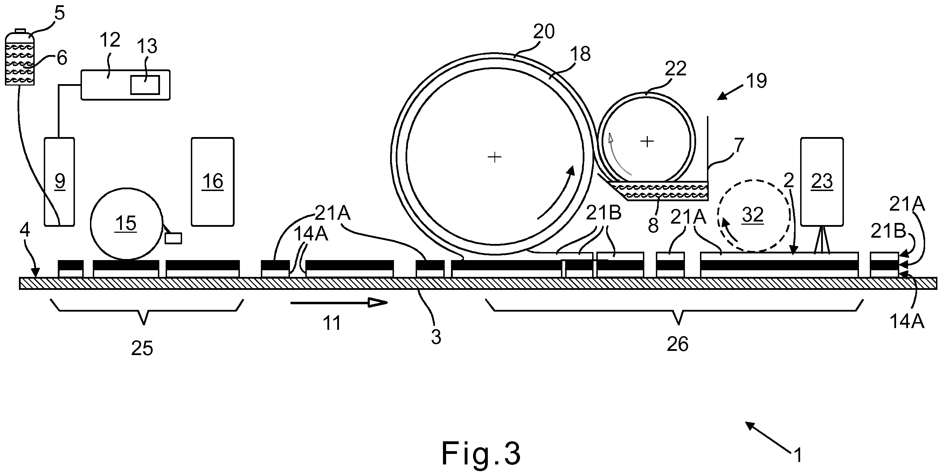

In Fig. 3 ist erkennbar, dass mit Hilfe des Transferkörpers 18 auch mehrere aus dem zweiten Material 8 bestehende weitere Materialschichten 21A, 21B direkt übereinander geschichtet werden können, um die Materialstärke zu vergrößern. Obwohl diese Schichten aus dem gleichen Material bestehen, sind sie in Fig. 3 aus Gründen der besseren Lesbarkeit unterschiedlich dargestellt, nämlich die Schicht 21A schwarz und die Schicht 21B weiß. Während des Auftragens der zweiten weiteren Materialschicht 21B sind die Abgabeeinrichtung 9 und die erste Fixiereinrichtung 16 inaktiv.

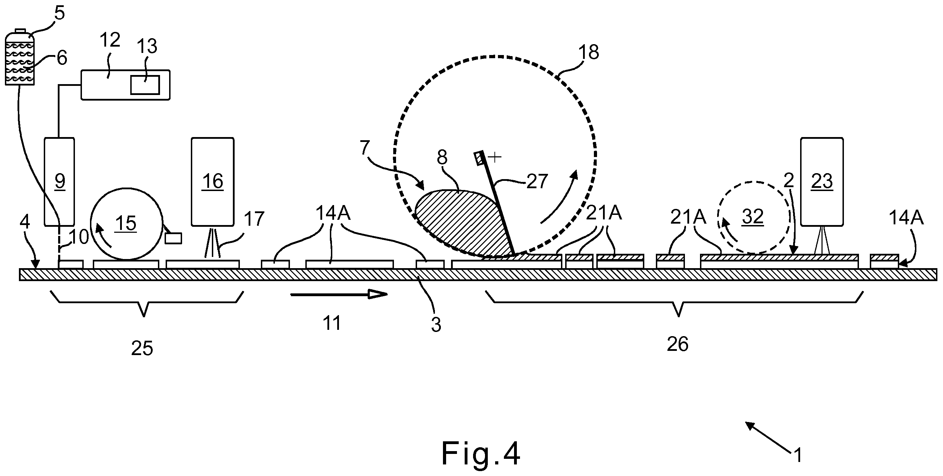

Bei dem in Fig. 4 dargestellten Ausführungsbeispiel ist der Transferkörper 18 als Rotations-Siebdruckwalze ausgestaltet. Diese weist eine perforierte, siebartige Mantelfläche auf. Das zweite Reservoir 7 ist in der Innenhöhlung der Rotations-Siebdruckwalze angeordnet.

Die in der Mantelfläche vorgesehenen Perforationslöcher sind bezüglich ihrer Abmessungen derart auf die Viskosität des zweiten Materials 8 abgestimmt, dass das zweite Material 8 mittels eines an der Innenmantelfläche der Zylinderwand der Rotations-Siebdruckwalze linienförmig anliegenden Rakels 27 durch die Perforationslöcher hindurchdrückbar ist. Außerhalb des Wirkungsbereich des Rakels 27 tritt das zweite Material 8 nicht durch die Perforationslöcher hindurch.

Im Übrigen entspricht die in Fig. 4 abgebildete Vorrichtung der in den Fig. 1 bis 3 gezeigten Vorrichtung, so dass die Beschreibung von Fig. 1 bis 3 für Fig. 4 entsprechend gilt.

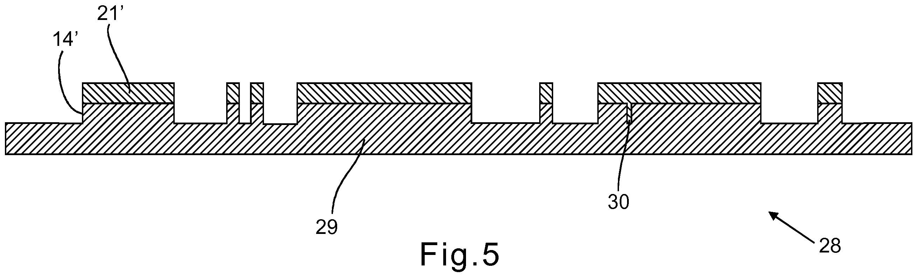

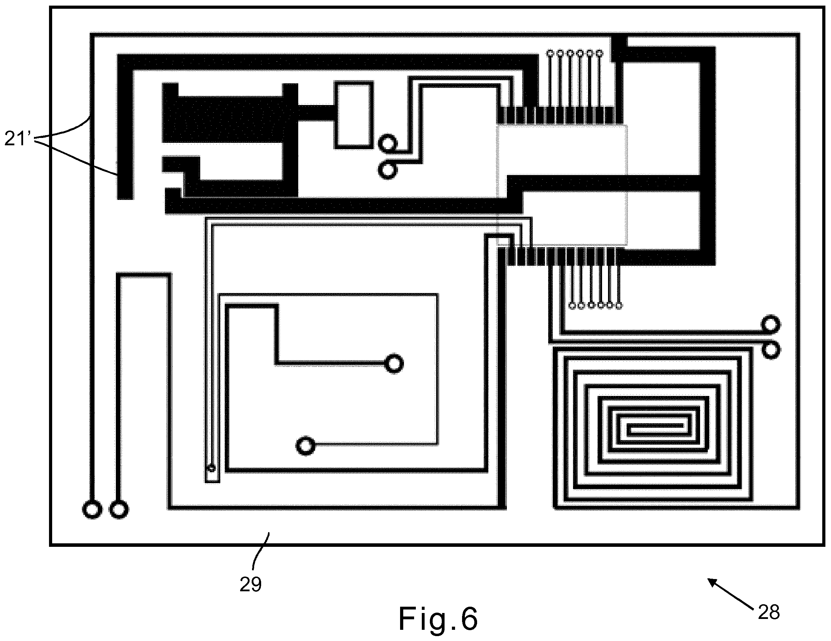

Die Vorrichtung kann auch zum Herstellen gedruckter elektrischer Leiterplatten 28 verwendet werden (Fig. 5 und 6). Dabei wird zunächst mit Hilfe der Abgabeeinrichtung 9 durch schichtweisen Materialauftrag eines elektrisch isolierenden Materials ein an seiner Oberfläche strukturierter Isolationskorpus 29 hergestellt und verfestigt. In einem weiteren Verfahrensschritt wird mit Hilfe des Transferkörpers 18 auf die oberste strukturierte Materialschicht 14' mindestens eine weitere Materialschicht 21' aus einem hochviskosen elektrisch leitenden Material aufgebracht und verfestigt.

Bei dem in Fig. 5 gezeigten Ausführungsbeispiel ist die das erste Material 6 aufweisende Materialschicht 14' derart strukturiert, dass sie an mindestens einer Stelle ein Durchtrittsloch 30 aufweist, welches die Materialschicht 14' quer zu ihrer Erstreckungsebene bis zu der darunter befindlichen Materialschicht durchsetzt. Die Querschnittsabmessung bzw. die lichte Weite des Durchtrittslochs 30 ist derart gering, dass der Materialfilm des zweiten Materials 8 beim Auftragen der Materialschicht 21' am Rand des Durchtrittslochs 30 nicht abreißt. Dadurch fließt das als Verstärkungsmaterial dienende zweite Material 8 beim Auftragen der Materialschicht 21' in das Durchtrittsloch 30 hinein. Durch die Materialschicht 21' wird also eine Stützstruktur gebildet, welche die Leiterplatte 28 sowohl parallel zu ihrer Erstreckungsebene (horizontal) als auf quer dazu (vertikal) verstärkt. Durch diese Maßnahme wird insbesondere bei einer Biegebelastung der Leiterplatte 28 die Gefahr reduziert, dass sich die als Leiterbahn dienende Materialschicht 21' von dem Isolationskorpus 29 ablöst.

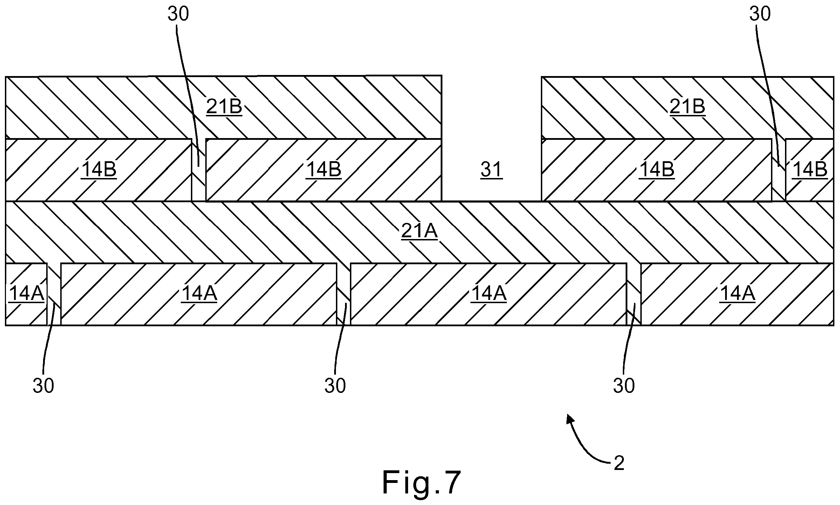

Fig. 7 zeigt einen Längsschnitt durch einen Formgegenstand 2, bei dem sich das zweite Material der als Verstärkungsschicht dienenden Materialschichten 21A, 21B durch Durchtrittslöcher 30 der jeweils darunter befindlichen, aus dem ersten Material 6 bestehenden Schicht 14A, 14B hindurch erstreckt. Deutlich ist erkennbar, dass Materialschicht 21B durch die Durchtrittslöcher 30 hindurch die darunter befindliche Materialschicht 21A kontaktiert. Durch die auf diese Weise gebildete Verstärkungsstruktur wird der Formgegenstand 2 sowohl parallel zu den Materialschichten 14A, 14B, 21A, 21B also auch quer dazu verstärkt.

Die lichte Weite der Durchtrittslöcher 30 ist kleiner als 25% des vertikale Abstands zwischen den aus dem ersten Material 6 bestehenden Materialschichten 14A, 14B. Dadurch reißt der Materialfilm des zweiten Materials 8 beim Auftragen der Materialschichten 21A, 21B am Rand der Durchtrittslöcher 30 nicht ab.

Wie in Fig. 7 weiter erkennbar ist, ist eine in der Materialschicht 14B gebildete Durchtrittsöffnung 31, deren lichte Weite größer ist als der vertikale Abstand zwischen den Materialschichten 14A, 14B nicht mit dem zweiten Material 8 befüllt. Im Bereich dieser Durchtrittsöffnung 31 entspricht daher die Struktur der Materialschicht 21B derjenigen der darunter liegenden Materialschicht 14B.

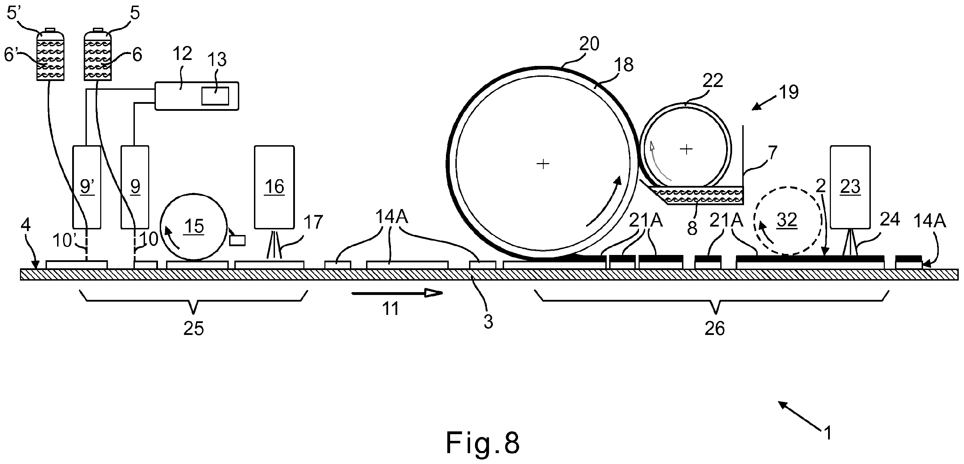

Die Vorrichtung 1 kann auch zum Aufbringen von Materialportionen zweier unterschiedlicher erster Materialien 6, 6' ausgestaltet sein. Wie in Fig. 8 zu sehen ist, hat die Vorrichtung 1 zu diesem Zweck zwei erste Reservoirs 5, 5', die jeweils über eine Leitung mit einer ihnen zugeordneten, ortsfesten Abgabeeinrichtung 9, 9' (Inkjet-Druckkopf) für das betreffende erste Material 6, 6' verbunden sind. Das eine erste Reservoir 5 ist mit einem fließfähigen Bau-Material 6 und das andere erste Reservoir 5' ist mit einem fließfähigen Stütz-Material 6' befüllt. Mit Hilfe der einen Abgabeeinrichtung 9 können Materialportionen 10 des ersten Materials 6 und mit Hilfe der anderen Abgabeeinrichtung 9' Materialportionen 10' des ersten Materials 6' auf die Basisfläche 4 bzw. eine darauf befindliche verfestigte Materialschicht des dreidimensionalen Formgegenstands 2 abgegeben werden. Das mit Hilfe der Abgabeeinrichtung 9' auftragbare Stütz-Material 6' kann beim Auftragen der Materialschichten zum Unterstützen des Bau-Materials 6 dienen, insbesondere um Überhänge herzustellen. Beide Abgabeeinrichtungen 9, 9' sind mit einer gemeinsamen Steuereinrichtung 12 verbunden, die einen Datenspeicher 13 zum Ablegen von Geometriedaten des herzustellenden Formgegenstands 2 aufweist.

Vorteilhaft ist, wenn zusätzlich zu der ersten Glättungswalze 15 und der ersten Fixiereinrichtung 16 zwischen den Material-Abgabeeinrichtungen 9' und 9 eine zusätzliche Glättungswalze und/oder eine zusätzliche Fixiereinrichtung angeordnet sind (in Fig. 8 nicht dargestellt), um das erste Material 6' mit der zusätzlichen Nivelliereinrichtung zu nivellieren und anschließend mit der zusätzliche Fixiereinrichtung zu verfestigen. Dies erlaubt eine zusätzlich erhöhte Oberflächen-Qualität nach dem Verfestigen zwischen den ersten Materialien 6'und 6.

Zusammenfassend betrifft die Erfindung also ein Verfahren zum Herstellen eines dreidimensionalen Formgegenstands (2) mittels schichtweisem Materialauftrag gemäß dem Anpruch 1.

Außerdem betrifft die Erfindung auf eine Vorrichtung (1) zum Herstellen eines dreidimensionalen Formgegenstands (2) mittels schichtweisem Materialauftrag gemäß dem Anspruch 3.

## Patentansprüche

1. Verfahren zum Herstellen eines dreidimensionalen Formgegenstands (2) mittels schichtweisem Materialauftrag, wobei Geometriedaten für den Formgegenstand (2), ein Trägerteil (3) mit einer Basisfläche (4) zur Aufnahme des dreidimensionalen Formgegenstands (2) sowie mindestens ein fließfähiges erstes und wenigstens ein sich davon unterscheidendes fließfähiges zweites Material (6, 6', 8) bereitgestellt werden, wobei Materialportionen (10) des mindestens einen fließfähigen ersten Materials (6, 6') entsprechend den Geometriedaten auf die Basisfläche (4) und/oder eine darauf befindliche verfestigte Materialschicht des dreidimensionalen Formgegenstands (2) unter Verwendung mindestens einer Düse aufgebracht werden, um mindestens eine Materialschicht (14A, 14B, 14') des dreidimensionalen Formgegenstands (2) zu erzeugen, und wobei die mindestens eine, aus dem wenigstens einen fließfähigen ersten Material (6, 6') bestehende Materialschicht (14A, 14B, 14') und mindestens eine aus dem wenigstens einen fließfähigen zweiten Material (8) bestehende weitere Materialschicht (21A, 21B, 21') verfestigt werden, wobei mindestens ein Transferkörper (18) bereitgestellt wird, wobei ein Oberflächenbereich des Transferkörpers (18) mit einer Schicht (20) des fließfähigen zweiten Materials (8) beschichtet und diese Schicht (20) derart mit der der Basisfläche (4) abgewandten Oberfläche der obersten verfestigten Materialschicht des dreidimensionalen Formgegenstands (2) in Kontakt gebracht wird, dass das fließfähige zweite Material (8) von dem Transferkörper (18) auf die Oberfläche der aus dem wenigstens einen ersten Material (6, 6') bestehenden obersten verfestigten Materialschicht (14A, 14B, 14') des dreidimensionalen Formgegenstands (2) übertragen wird und auf dieser die weitere Materialschicht (21A, 21B, 21') erzeugt, deren Struktur zumindest bereichsweise derjenigen der aus dem wenigstens einen ersten Material (6, 6') bestehenden obersten verfestigten Materialschicht (14A, 14B, 14') des dreidimensionalen Formgegenstands (2) entspricht, wobei die Oberfläche der weiteren Materialschicht (21A, 21B, 21') in einem konstanten Abstand zur Basisfläche (4) angeordnet wird und wobei die weitere Materialschicht (21A, 21B, 21') verfestigt wird.

2. Verfahren nach Anspruch 1, **dadurch gekennzeichnet, dass** auf eine aus dem zweiten Material (8) bestehende verfestigte Materialschicht (21A) durch Aufbringen von Materialportionen (10) eine Materialschicht (14B) aus dem mindestens einen ersten Material (6, 6') derart strukturiert aufgebracht wird, dass zwischen zwei in der Erstreckungsebene der zuletzt genannten Materialschicht (14B) zueinander benachbarten Bereichen dieser Materialschicht (14B) mindestens ein sich bis zu der darunterliegenden verfestigten Materialschicht (21A) erstreckendes Durchtrittsloch (30) gebildet ist, dass die derart strukturierte Materialschicht (14B) danach verfestigt wird, dass danach auf diese Materialschicht (14B) mittels des Transferkörpers (18) das zweite Material (8) aufgebracht wird, und dass mindestens eine Querschnittsabmessung des Durchtrittslochs (30) derart
a) an den Druck, mit dem das zweite Material (8) auf die das Durchtrittsloch (30) aufweisende Materialschicht (14B) aufgebracht wird, und/oder
b) an die Materialstärke, mit dem das zweite Material (8) auf die das Durchtrittsloch (30) aufweisende Materialschicht (14B) aufgebracht wird, und/oder
c) an die Viskosität des zweiten Materials (8)
angepasst wird, dass das Durchtrittsloch (30) mit dem mittels des Transferkörpers (18) aufgetragenen zweiten Material (8) befüllt wird und das zweite Material (8) mit der zuerst genannten verfestigten Materialschicht (21A) in Kontakt gerät.

3. Vorrichtung (1) zum Herstellen eines dreidimensionalen Formgegenstands (2) mittels schichtweisem Materialauftrag, mit einem eine Basisfläche (4) zur Aufnahme des Formgegenstands (2) aufweisenden Trägerteil (3), mit mindestens einem ersten Reservoir (5, 5') zur Aufnahme wenigstens eines fließfähigen ersten Materials (6, 6') und wenigstens einem zweiten Reservoir (7) zur Aufnahme eines sich vom mindestens einen ersten fließfähigen Material (6, 6') unterscheidenden fließfähigen zweiten Materials (8), mit mindestens einer, mit dem mindestens einen ersten Reservoir (5, 5') verbundenen Abgabeeinrichtung (9, 9'), die mindestens eine Düse zur Abgabe von Materialportionen (10) des mindestens einen ersten Materials (6, 6') auf die Basisfläche (4) und/oder eine darauf befindliche verfestigte Materialschicht des dreidimensionalen Formgegenstands (2) aufweist, mit einer ersten Positioniereinrichtung, mittels welcher das Trägerteil (3) und die Abgabeeinrichtung (9, 9') zum Auftragen der Materialportionen (10) auf die Basisfläche (4) und/oder der verfestigten Materialschicht relativ zueinander beweglich positionierbar sind, wobei die Abgabeeinrichtung (9, 9') und die erste Positioniereinrichtung mit einer Steuereinrichtung (12) verbunden sind, die einen Datenspeicher (13) zum Ablegen von Geometriedaten des herzustellenden Formgegenstands aufweist, wobei mittels der Steuereinrichtung (12) die Abgabe der Materialportionen (10) und die Positioniereinrichtung derart in Abhängigkeit von den Geometriedaten steuerbar sind, dass mindestens eine aus dem mindestens einen ersten Material (6, 6') bestehende Materialschicht (21A, 21B, 21') des dreidimensionalen Formgegenstands (2) auf die Basisfläche (4) und/oder die darauf befindliche verfestigte Materialschicht des dreidimensionalen Formgegenstands (2) aufbringbar ist, und mit mindestens einer Fixiereinrichtung (16, 23) zum Verfestigen der mindestens einen aus dem mindestens einen fließfähigen ersten Material (6, 6') bestehenden Materialschicht (14A, 14B, 14') und zum Verfestigen mindestens einer aus dem fließfähigen zweiten Material (8) bestehenden weiteren Materialschicht (21A, 21B, 21'), wobei die Vorrichtung (1) mindestens eine Materialauftragungseinrichtung zum Auftragen einer weiteren Materialschicht (21A, 21B, 21') aufweist, deren Oberfläche in einem konstanten Abstand zur Basisfläche (4) angeordnet ist, wobei die Materialauftragungseinrichtung einen Transferkörper (18) und eine mit dem zweiten Reservoir (7) in Kontakt stehende Beschichtungseinrichtung (19) aufweist, mittels der zumindest ein Oberflächenbereich des Transferkörpers (18) mit einer Schicht (20) des zweiten Materials (8) beschichtbar ist, wobei die Vorrichtung (1) eine zweite Positioniereinrichtung hat, mittels welcher der Oberflächenbereich des Transferkörpers (18) mit der der Basisfläche (4) abgewandten Oberfläche der obersten verfestigten Materialschicht in Kontakt bringbar ist, derart, dass das fließfähige zweite Material (8) als die weitere Materialschicht (21A, 21B, 21') von dem Transferkörper auf die Oberfläche der aus dem wenigstens einen ersten Material (6, 6') bestehenden obersten verfestigten ersten Materialschicht übertragen wird und die Struktur der weiteren Materialschicht (21A, 21B, 21') zumindest bereichsweise derjenigen der obersten verfestigten Materialschicht (14A) entspricht.

4. Vorrichtung (1) nach Anspruch 3, **dadurch gekennzeichnet, dass** die Vorrichtung eine erste Nivelliereinrichtung hat, die ein erstes Nivellierwerkzeug aufweist, das derart mit der Oberfläche einer auf die Basisfläche (4) und/oder eine verfestigte Materialschicht aufgebrachten Materialschicht (14A, 14B) aus dem mindestens einen fließfähigen ersten Material (6, 6') in Kontakt bringbar ist, dass die Oberfläche des fließfähigen ersten Materials (6,6') in einem konstanten Abstand zur Basisfläche (4) angeordnet wird.

5. Vorrichtung (1) nach Anspruch 3 oder 4, **dadurch gekennzeichnet, dass** die Materialauftragungseinrichtung eine zweite Nivelliereinrichtung hat, die ein zweites Nivellierwerkzeug aufweist, das derart mit der Oberfläche einer auf die Basisfläche (4) und/oder eine verfestigte Materialschicht aufgebrachten Materialschicht (21A, 21B) aus dem fließfähigen zweiten Material (8) in Kontakt bringbar ist, dass die Oberfläche des fließfähigen zweiten Materials (8) in einem konstanten Abstand zur Basisfläche (4) angeordnet wird.

6. Vorrichtung (1) nach Anspruch 4 oder 5, **dadurch gekennzeichnet, dass** das erste und/oder das zweite Nivellierwerkzeug als Glättungswalze (15) ausgestaltet ist, die um eine parallel zur Basisfläche (4) angeordnete Drehachse relativ zum Trägerteil (3) drehbar gelagert ist.

7. Vorrichtung (1) nach einem der Ansprüche 3 bis 6, **dadurch gekennzeichnet, dass** die Abgabeeinrichtung (9, 9') zur Abgabe der Materialportionen (10) mindestens eine digitale Materialabgabeeinheit aufweist.

8. Vorrichtung (1) nach Anspruch 7, **dadurch gekennzeichnet, dass** die Abgabeeinrichtung (9, 9') mindestens eine Reihe mit mehreren nebeneinander angeordneten Materialabgabeeinheiten zur Abgabe der Materialportionen aufweist, und dass sich die Reihe parallel zur Basisfläche (4) und quer zu der Richtung erstreckt, in die die Abgabeeinrichtung (9, 9') und das Trägerteil (3) parallel zur Basisfläche (4) relativ zueinander bewegbar sind.

9. Vorrichtung (1) nach einem der Ansprüche 3 bis 8, **dadurch gekennzeichnet, dass** der Transferkörper (18) als Auftragswalze ausgestaltet ist, die mit Hilfe der zweiten Positioniereinrichtung um eine parallel zur Basisfläche (4) angeordnete Rotationsachse drehantreibbar ist.

10. Vorrichtung (1) nach Anspruch 9, **dadurch gekennzeichnet, dass** die Auftragswalze als Rotations-Siebdruckwalze ausgestaltet ist.

11. Vorrichtung (1) nach Anspruch 9 oder 10, **dadurch gekennzeichnet, dass** die aus der Abgabeeinrichtung (9, 9') und der Auftragswalze gebildete Anordnung und das Trägerteil (3) mittels der ersten Positioniereinrichtung entlang einer parallel zur Basisfläche angeordneten geraden Linie relativ zueinander hin- und her bewegbar sind.

12. Vorrichtung (1) nach einem der Ansprüche 9 bis 11, **dadurch gekennzeichnet, dass** die aus der Abgabeeinrichtung (9, 9') und der Auftragswalze gebildete Anordnung und das Trägerteil (3) mittels der ersten Positioniereinrichtung um eine normal zu der Basisfläche (4) angeordnete Drehachse relativ zueinander verdrehbar sind, dass die Auftragswalze konisch ausgebildet ist, und dass die Rotationsachse der Auftragswalze durch die Drehachse verläuft.

13. Vorrichtung (1) nach einem der Ansprüche 9 bis 12, **dadurch gekennzeichnet, dass** die aus der Abgabeeinrichtung (9, 9') und der Auftragswalze gebildete Anordnung und das Trägerteil (3) mittels der ersten Positioniereinrichtung normal zu der Basisfläche (4) voneinander weg und aufeinander zu bewegbar sind.

14. Vorrichtung (1) nach einem der Ansprüche 3 bis 13, **dadurch gekennzeichnet, dass** das zweite Material (8) im verfestigten Zustand eine größere mechanische Festigkeit aufweist als das erste Material (6, 6') und/oder dass das zweite Material (8) andere mechanische, elektrische, oder chemische Eigenschaften hat als das erste Material (6, 6').

15. Vorrichtung (1) nach einem der Ansprüche 3 bis 14, **dadurch gekennzeichnet, dass** das zweite Material (8) elektrisch und/oder optisch und/oder magnetisch leitfähig und das erste Material (6, 6') elektrisch und/oder optisch und/oder magnetisch isolierend ist.

## Claims

1. Method for producing a three-dimensional shaped object (2) by means of layer-by-layer material application, wherein geometric data for the shaped object (2), a carrier part (3) having a base surface (4) for holding the three-dimensional shaped object (2), and at least one flowable first material and at least one flowable second material that is different therefrom (6, 6', 8) are provided, wherein material portions (10) of the at least one flowable first material (6, 6') are applied in accordance with the geometric data to the base surface (4) and/or to a solidified material layer of the three-dimensional shaped object (2) located thereon using at least one nozzle in order to generate at least one material layer (14A, 14B, 14') of the three-dimensional shaped object (2), and wherein the at least one material layer (14A, 14B, 14') consisting of the at least one flowable first material (6, 6') and at least one further material layer (21A, 21B, 21') consisting of the at least one flowable second material (8) are solidified, wherein at least one transfer body (18) is provided, wherein a surface region of the transfer body (18) is coated with a layer (20) of the flowable second material (8) and this layer (20) is brought into contact with the surface of the uppermost solidified material layer of the three-dimensional shaped object (2) that is remote from the base surface (4) such that the flowable second material (8) is transferred from the transfer body (18) to the surface of the uppermost solidified material layer (14A, 14B, 14') of the three-dimensional shaped object (2) consisting of the at least one first material (6, 6') and generates thereon the further material layer (21A, 21B, 21'), the structure of which corresponds at least in some regions to that of the uppermost solidified material layer (14A, 14B, 14') of the three-dimensional shaped object (2) consisting of the at least one first material (6, 6'), wherein
the surface of the further material layer (21A, 21B, 21') is arranged at a constant distance from the base surface (4), and wherein
the further material layer (21A, 21B, 21') is solidified.

2. Method according to Claim 1, **characterized in that** there is applied in a structured manner to a solidified material layer (21A) consisting of the second material (8), by application of material portions (10), a material layer (14B) of the at least one first material (6, 6') such that there is formed between two regions of the last-mentioned material layer (14B) that are adjacent to one another in the extension plane of that material layer (14B) at least one through-hole (30) which extends to the underlying solidified material layer (21A), **in that** the material layer (14B) so structured is then solidified, **in that** the second material (8) is then applied to that material layer (14B) by means of the transfer body (18), and **in that** at least one cross-sectional dimension of the through-hole (30) is adapted
a) to the pressure with which the second material (8) is applied to the material layer (14B) having the through hole (30), and/or
b) to the material thickness with which the second material (8) is applied to the material layer (14B) having the through-hole (30), and/or
c) to the viscosity of the second material (8)
such that the through-hole (30) is filled with the second material (8) applied by means of the transfer body (18) and the second material (8) comes into contact with the first-mentioned solidified material layer (21A).

3. Device (1) for producing a three-dimensional shaped object (2) by means of layer-by-layer material application, having a carrier part (3) having a base surface (4) for holding the shaped object (2), having at least one first reservoir (5, 5') for holding at least one flowable first material (6, 6') and at least one second reservoir (7) for holding a flowable second material (8) that is different from the at least one first flowable material (6, 6'), having at least one delivery device (9, 9') which is connected to the at least one first reservoir (5, 5') and which has at least one nozzle for delivering material portions (10) of the at least one first material (6, 6') to the base surface (4) and/or to a solidified material layer of the three-dimensional shaped object (2) located thereon, having a first positioning device by means of which the carrier part (3) and the delivery device (9, 9') can be positioned movably relative to one another for applying the material portions (10) to the base surface (4) and/or to the solidified material layer, wherein the delivery device (9, 9') and the first positioning device are connected to a controller (12) which has a data memory (13) for storing geometric data of the shaped object to be produced, wherein the delivery of the material portions (10) and the positioning device are controllable by means of the controller (12) in dependence on the geometric data such that at least one material layer (21A, 21B, 21') of the three-dimensional shaped object (2) consisting of the at least one first material (6, 6') can be applied to the base surface (4) and/or to the solidified material layer of the three-dimensional shaped object (2) located thereon, and having at least one fixing device (16, 23) for solidifying the at least one material layer (14A, 14B, 14') consisting of the at least one flowable first material (6, 6') and for solidifying at least one further material layer (21A, 21B, 21') consisting of the flowable second material (8), wherein
the device (1) has at least one material application device for applying a further material layer (21A, 21B, 21'), the surface of which is arranged at a constant distance from the base surface (4), wherein the material application device has a transfer body (18) and a coating device (19) which is in contact with the second reservoir (7) and by means of which at least one surface region of the transfer body (18) can be coated with a layer (20) of the second material (8), wherein
the device (1) has a second positioning device by means of which the surface region of the transfer body (18) can be brought into contact with the surface of the uppermost solidified material layer that is remote from the base surface (4), such that the flowable second material (8) is transferred as the further material layer (21A, 21B, 21') from the transfer body to the surface of the uppermost solidified first material layer consisting of the at least one first material (6, 6'), and the structure of the further material layer (21A, 21B, 21') corresponds at least in some regions to that of the uppermost solidified material layer (14A).

4. Device (1) according to Claim 3, **characterized in that** the device has a first levelling device which has a first levelling tool which can be brought into contact with the surface of a material layer (14A, 14B) of the at least one flowable first material (6, 6') applied to the base surface (4) and/or to a solidified material layer, such that the surface of the flowable first material (6, 6') is arranged at a constant distance from the base surface (4).

5. Device (1) according to Claim 3 or 4, **characterized in that** the material application device has a second levelling device which has a second levelling tool which can be brought into contact with the surface of a material layer (21A, 21B) of the flowable second material (8) applied to the base surface (4) and/or to a solidified material layer, such that the surface of the flowable second material (8) is arranged at a constant distance from the base surface (4).

6. Device (1) according to Claim 4 or 5, **characterized in that** the first and/or the second levelling tool is in the form of a smoothing roll (15) which is mounted so as to be rotatable relative to the carrier part (3) about an axis of rotation arranged parallel to the base surface (4).

7. Device (1) according to one of Claims 3 to 6, **characterized in that** the delivery device (9, 9') for delivering the material portions (10) has at least one digital material delivery unit.

8. Device (1) according to Claim 7, **characterized in that** the delivery device (9, 9') has at least one row of a plurality of material delivery units arranged side by side for delivering the material portions, and **in that** the row extends parallel to the base surface (4) and transverse to the direction in which the delivery device (9, 9') and the carrier part (3) are movable relative to one another parallel to the base surface (4).

9. Device (1) according to one of Claims 3 to 8, **characterized in that** the transfer body (18) is in the form of an applicator roll which can be driven in rotation by means of the second positioning device about an rotational axis arranged parallel to the base surface (4).

10. Device (1) according to Claim 9, **characterized in that** the applicator roll is in the form of a rotary screen printing roll.

11. Device (1) according to Claim 9 or 10, **characterized in that** the assembly formed of the delivery device (9, 9') and the applicator roll, and the carrier part (3) are movable to and fro relative to one another by means of the first positioning device along a straight line arranged parallel to the base surface.

12. Device (1) according to one of Claims 9 to 11, **characterized in that** the assembly formed of the delivery device (9, 9') and the applicator roll, and the carrier part (3) are rotatable relative to one another by means of the first positioning device about an axis of rotation arranged normal to the base surface (4), **in that** the applicator roll is conical, and **in that** the rotational axis of the applicator roll runs through the axis of rotation.

13. Device (1) according to one of Claims 9 to 12, **characterized in that** the assembly formed of the delivery device (9, 9') and the applicator roll, and the carrier part (3) are movable by means of the first positioning device away from one another and towards one another normal to the base surface (4).

14. Device (1) according to one of Claims 3 to 13, **characterized in that** the second material (8) in the solidified state has a greater mechanical strength than the first material (6, 6'), and/or **in that** the second material (8) has different mechanical, electrical or chemical properties than the first material (6, 6').

15. Device (1) according to one of Claims 3 to 14, **characterized in that** the second material (8) is electrically and/or optically and/or magnetically conductive and the first material (6, 6') is electrically and/or optically and/or magnetically insulating.

## Revendications

1. Procédé de fabrication d'un objet moulé tridimensionnel (2) par application de matériau en couches, dans lequel des données géométriques pour l'objet moulé (2), une partie de support (3) avec une surface de base (4) pour recevoir l'objet moulé tridimensionnel (2) ainsi qu'au moins un premier matériau apte à l'écoulement et au moins un deuxième matériau apte à l'écoulement (6, 6', 8) sont prévus, des portions de matériau (10) dudit au moins un premier matériau apte à l'écoulement (6, 6') étant appliquées en fonction des données géométriques sur la surface de base (4) et/ou une couche de matériau solidifiée de l'objet moulé tridimensionnel (2) se trouvant sur celle-ci en utilisant au moins une buse, pour produire au moins une couche de matériau (14A, 14B, 14') de l'objet moulé tridimensionnel (2), et ladite au moins une couche de matériau (14A, 14B, 14') constituée dudit au moins un premier matériau apte à l'écoulement (6, 6') et au moins une autre couche de matériau (21A, 21B, 21') constituée dudit au moins un deuxième matériau (8) apte à l'écoulement étant solidifiées, au moins un corps de transfert (18) étant prévu, une zone (18) de surface du corps de transfert étant revêtue d'une couche (20) du deuxième matériau (8) apte à l'écoulement, cette couche (20) étant mise en contact avec la surface, opposée à la surface de base (4), de la couche de matériau solidifiée la plus haute de l'objet moulé tridimensionnel (2) de telle sorte que le deuxième matériau apte à l'écoulement (8) soit transféré par le corps de transfert (18) sur la surface de la couche de matériau solidifiée la plus haute (14A, 14B, 14'), constituée d'au moins un premier matériau (6, 6'), de l'objet moulé tridimensionnel (2) et forme sur celle-ci la couche de matériau supplémentaire (21A, 21B, 21'), dont la structure correspond au moins par zones à celle de la couche de matériau solidifiée la plus haute (14A, 14B, 14') de l'objet moulé tridimensionnel (2), constituée dudit au moins un premier matériau (6, 6'), la surface de l'autre couche de matériau (21A, 21B, 21') étant disposée à une distance constante de la surface de base (4) et l'autre couche de matériau (21A, 21B, 21') étant solidifiée.

2. Procédé selon la revendication 1, **caractérisé en ce qu'**une couche de matériau (14B) constituée dudit au moins un premier matériau (6, 6') est appliquée de manière structurée sur une couche de matériau solidifiée (21A) constituée du deuxième matériau (8) par application de portions de matériau (10), **en ce qu'**entre deux zones de cette couche de matériau (14B) voisines l'une de l'autre dans le plan d'extension de la couche de matériau (14B) mentionnée en dernier lieu, il est formé au moins un trou de passage (30) s'étendant jusqu'à la couche de matériau (21A) solidifiée sous-jacente, **en ce que** la couche de matériau (14B) structurée de cette manière est ensuite solidifiée, **en ce qu'**ensuite le deuxième matériau (8) est appliqué sur cette couche de matériau (14B) au moyen du corps de transfert (18), et **en ce qu'**au moins une dimension de la section transversale du trou de passage (30) est déterminée de telle sorte qu'elle soit adaptée
a) à la pression avec laquelle le deuxième matériau (8) est appliqué sur la couche de matériau (14B) présentant le trou de passage (30), et/ou
b) à l'épaisseur du matériau avec lequel le deuxième matériau (8) est appliqué sur la couche de matériau (14B) présentant le trou de passage (30), et/ou
c) à la viscosité du deuxième matériau (8), de sorte que le trou de passage (30) est rempli du deuxième matériau (8) appliqué au moyen du corps de transfert (18) et que le deuxième matériau (8) entre en contact avec la couche de matériau solidifiée (21A) mentionnée en premier.

3. Dispositif (1) pour la fabrication d'un objet moulé tridimensionnel (2) au moyen d'une application de matériau en couches, avec une partie de support (3) présentant une surface de base (4) destinée à recevoir l'objet moulé (2), avec au moins un premier réservoir (5, 5') destiné à recevoir au moins un premier matériau apte à l'écoulement (6, 6') et au moins un deuxième réservoir (7) destiné à recevoir un deuxième matériau (8) apte à l'écoulement différent d'au moins un premier matériau apte à l'écoulement (6, 6'), avec au moins un dispositif de distribution (9, 9') relié à ledit au moins un premier réservoir (5, 5'), qui présente au moins une buse pour la distribution de portions de matériau (10) dudit au moins un premier matériau (6, 6') sur la surface de base (4) et/ou une couche de matériau solidifiée de l'objet moulé tridimensionnel (2) se trouvant dessus, avec un premier dispositif de positionnement, au moyen duquel la partie de support (3) et le dispositif de distribution (9, 9') pour l'application des portions de matériau (10) sur la surface de base (4) et/ou la couche de matériau solidifiée sont aptes à être positionnés de manière mobile l'un par rapport à l'autre, le dispositif de distribution (9, 9') et le premier dispositif de positionnement étant reliés à un dispositif de commande (12), qui présente une mémoire de données (13) pour stocker des données géométriques de l'objet moulé à fabriquer, la distribution des portions de matériau (10) et le dispositif de positionnement étant aptes à être commandés au moyen du dispositif de commande (12) en fonction des données géométriques de telle sorte qu'au moins une couche de matériau (21A, 21B, 21')constituée dudit au moins un premier matériau (6, 6') de l'objet moulé tridimensionnel (2) sur la surface de base (4) et/ou sur la couche de matériau solidifiée de l'objet moulé tridimensionnel (2) se trouvant sur celle-ci, et avec au moins un dispositif de fixation (16, 23) pour la solidification de ladite au moins une couche de matériau (14A, 14B, 14') constituée dudit au moins un premier matériau apte à l'écoulement (6, 6') et pour la solidification d'au moins une autre couche de matériau (21A, 21B, 21') constituée du deuxième matériau apte à l'écoulement (8), le dispositif (1) présentant au moins un dispositif d'application de matériau pour appliquer une autre couche de matériau (21A, 21B, 21'), dont la surface est disposée à une distance constante de la surface de base (4), le dispositif d'application de matériau présentant un corps de transfert (18) et un dispositif de revêtement (19) en contact avec le deuxième réservoir (7), au moyen duquel au moins une zone (18) de surface du corps de transfert est apte à être revêtue d'une couche (20) du deuxième matériau (8), le dispositif (1) ayant un deuxième dispositif de positionnement au moyen duquel la zone (18) de surface du corps de transfert peut être mise en contact avec la surface, opposée à la surface de base (4), de la couche de matériau solidifiée la plus haute, de telle manière que le deuxième matériau (8) apte à l'écoulement soit transféré sous la forme de l'autre couche de matériau (21A, 21B, 21') du corps de transfert sur la surface de la première couche de matériau solidifiée la plus haute constituée dudit au moins un premier matériau (6, 6') et que la structure de l'autre couche de matériau (21A, 21B, 21') correspond au moins par zones à celle de la couche de matériau solidifiée la plus haute (14A).

4. Dispositif (1) selon la revendication 3, **caractérisé en ce que** le dispositif a un premier dispositif de nivellement qui présente un premier outil de nivellement qui est apte à être mis en contact avec la surface d'une couche de matériau (14A, 14B) appliquée sur la surface de base (4) et/ou une couche de matériau solidifiée et constituée dudit au moins un premier matériau apte à l'écoulement (6, 6') de telle sorte que la surface du premier matériau apte à l'écoulement (6, 6') est disposée à une distance constante de la surface de base (4).

5. Dispositif (1) selon la revendication 3 ou 4, **caractérisé en ce que** le dispositif d'application de matériau a un deuxième dispositif de nivellement qui présente un deuxième outil de nivellement qui est apte à être mis en contact avec la surface d'une couche de matériau (21A, 21B) appliquée sur la surface de base (4) et/ou une couche de matériau solidifiée et constituée du deuxième matériau apte à l'écoulement (8), de telle sorte que la surface du deuxième matériau apte à l'écoulement (8) est disposée à une distance constante de la surface de base (4).

6. Dispositif (1) selon la revendication 4 ou 5, **caractérisé en ce que** le premier et/ou le deuxième outil de nivellement est conçu sous la forme d'un rouleau de lissage (15) qui est monté de manière à pouvoir tourner par rapport à la pièce de support (3) autour d'un axe de rotation disposé parallèlement à la surface de base (4).

7. Dispositif (1) selon l'une des revendications 3 à 6, **caractérisé en ce que** le dispositif de distribution (9, 9') destiné à distribuer les portions de matériau (10) présente au moins une unité numérique de distribution de matériau.

8. Dispositif (1) selon la revendication 7, **caractérisé en ce que** le dispositif de distribution (9, 9') présente au moins une rangée de plusieurs unités de distribution de matière agencées côte à côte pour distribuer les portions de matière, et **en ce que** la rangée s'étend parallèlement à la surface de base (4) et transversalement à la direction dans laquelle le dispositif de distribution (9, 9') et la partie de support (3) sont mobiles l'un par rapport à l'autre parallèlement à la surface de base (4).

9. Dispositif (1) selon l'une des revendications 3 à 8, **caractérisé en ce que** le corps de transfert (18) est configuré sous la forme d'un rouleau d'application qui est apte à être entraîné en rotation autour d'un axe de rotation disposé parallèlement à la surface de base (4) à l'aide du deuxième dispositif de positionnement.

10. Dispositif (1) selon la revendication 9, **caractérisé en ce que** le rouleau d'application est conçu sous la forme d'un rouleau de sérigraphie rotatif.

11. Dispositif (1) selon la revendication 9 ou 10, **caractérisé en ce que** l'ensemble formé par le dispositif de distribution (9, 9') et le rouleau d'application et la partie de support (3) sont aptes à être déplacés en va-et-vient l'un par rapport à l'autre le long d'une ligne droite disposée parallèlement à la surface de base au moyen du premier dispositif de positionnement.

12. Dispositif (1) selon l'une des revendications 9 à 11, **caractérisé en ce que** l'ensemble formé par le dispositif de distribution (9, 9') et le rouleau d'application et la partie de support (3) sont aptes à être tournés l'un par rapport à l'autre autour d'un axe de rotation disposé perpendiculairement à la surface de base (4) au moyen du premier dispositif de positionnement, de sorte que le rouleau d'application est de forme conique, et que l'axe de rotation du rouleau d'application passe par l'axe de rotation.

13. Dispositif (1) selon l'une des revendications 9 à 12, **caractérisé en ce que** l'ensemble formé par le dispositif de distribution (9, 9') et le rouleau d'application et la partie de support (3) sont aptes à être éloignés et rapprochés l'un de l'autre de manière normale à la surface de base (4) au moyen du premier dispositif de positionnement.

14. Dispositif (1) selon l'une des revendications 3 à 13, **caractérisé en ce que** le deuxième matériau (8) présente, à l'état solidifié, une résistance mécanique supérieure à celle du premier matériau (6, 6') et/ou **en ce que** le deuxième matériau (8) a des propriétés mécaniques, électriques ou chimiques différentes de celles du premier matériau (6, 6').

15. Dispositif (1) selon l'une des revendications 3 à 14, **caractérisé en ce que** le deuxième matériau (8) est électriquement et/ou optiquement et/ou magnétiquement conducteur et le premier matériau (6, 6') est électriquement et/ou optiquement et/ou magnétiquement isolant.
